# FASCICULE DE BREVET EUROPEEN

(11) **EP 0 838 700 B1**
(45) Date de publication et mention de la délivrance du brevet: **13.12.2006**
(21) Numéro de dépôt: 97402496.0
(22) Date de dépôt: 22.10.1997
(51) Int. Cl.: G02B 6/255

(54) **Dispositif d'épissurage mécanique multivoies pour câbles à fibres optiques**
Mehrfache mechanische Spleissvorrichtung für faseroptische Kabel
Multipath mechanical splicing apparatus for fibre optic cables

(30) Priorité: 28.10.1996 FR 9613117
(43) Date de publication de la demande: 29.04.1998
(73) Titulaire: Prysmian Telecom Câbles et Systems France SA, 38230 Chavanoz (FR)
(72) Inventeur: Lesueur, Philippe, 22730 Tregastel (FR); Leguen, Bruno, 22300 Lannion (FR); Liegeois, Christian, 91450 Soisy Sur Seine (FR); Egon, Philippe, 22560 Pleumeur Bodou (FR)
(74) Mandataire: Lhuillier, René

(56) Documents cités:
- EP-A- 0 546 936
- WO-A-86/01306
- WO-A-94/04954
- PATENT ABSTRACTS OF JAPAN vol. 006, no. 241 (P-158), 30 novembre 1982 & JP 57 139716 A (NIPPON DENSHIN DENWA KOSHA), 28 août 1982,

## Description

L'invention se situe dans le domaine technique des câbles à fibres optiques et concerne plus précisément un dispositif d'épissurage qui présente l'avantage d'être montable sur le site.

On connaît des dispositifs d'épissurage mécanique simultané de plusieurs fibres provenant de câbles ou de rubans qu'il convient de réunir. Pour cela chaque extrémité du câble est immobilisée dans un boîtier de telle sorte que les extrémités dénudées des fibres optiques soient maintenues en position avant d'être placées les unes au bout des autres au sein d'un corps d'assemblage grâce auquel sera réalisée l'épissure. Ce corps d'assemblage se présente souvent comme un tunnel dans lequel sont placées les fibres des deux extrémités à raccorder, et grâce auquel on assure leur serrage. Ces opérations nécessitent de disposer d'un plan de travail auquel seront amenées les fibres, et d'un équipement approprié sur ledit plan de travail destiné à réaliser les épissures nécessaires qui sont ensuite replacées à l'endroit où elles doivent être définitivement implantées. Hormis le fait que cet équipement nécessite un nombre important de pièces et immobilise un espace spécial pour réaliser les épissures, il présente surtout l'inconvénient de devoir tirer jusqu'au plan de travail la longueur de câble nécessaire et de devoir ensuite lover sur le site d'implantation cette longueur de câble en surplus dont les extrémités ont été épissurées.

Il apparaîtrait évidemment beaucoup plus profitable de pouvoir s'affranchir de cette table de travail et de ses équipements, et d'effectuer sur le site même de leur implantation les épissures nécessaires.

A cette fin la Demanderesse s'est attachée à trouver une solution qui répond à ce problème en s'affranchissant des inconvénients propres aux systèmes connus.

L'invention a donc pour objet un dispositif d'épissurage mécanique pour câble à fibres optiques, qui comporte un corps central d'épissure servant au raccordement sur le site de deux fibres d'extrémité de câbles s'emboîtant dans ledit corps d'épissure, le corps central disposant de moyens pour le guidage et le verrouillage des fiches d'extrémité, ainsi que de moyens pour le positionnement des fibres dénudées, et un plateau étant logé à l'intérieur du corps central d'épissure et manoeuvrable par des cames pour plaquer et maintenir les fibres dénudées dans ledit corps central.

Selon une réalisation préférentielle du dispositif de l'invention, le corps central se compose d'une platine de base bordée de deux ailes verticales coiffées d'un chapeau de profil général trapézoïdal, et le tunnel ménagé entre les ailes reçoit le plateau en contact avec le fond plat du tunnel.

Le plateau est manoeuvré par des cames portées par le chapeau.

Selon une caractéristique particulière de l'invention, les moyens pour le guidage et le verrouillage des fiches d'extrémité dans le corps central d'épissure sont constitués, de rails creusés dans les parties latérales de la platine, d'épaulements latéraux horizontaux prévus à la base du chapeau, et de pans inclinés sur des lamelles horizontales qui prolongent le chapeau.

D'autre part les moyens pour le positionnement des fibres dénudées dans le corps central d'épissure sont constitués de rainures en forme de V creusées dans la partie plane inférieure du tunnel ménagé entre les ailes.

Selon une autre caractéristique principale de l'invention, la fiche d'extrémité se compose d'une partie inférieure et d'une partie supérieure fixées l'une à l'autre par un emmanchement forcé assuré entre des rebords de la partie inférieure et des échancrures de la partie supérieure.

D'autres caractéristiques particulières et avantages de l'invention ressortiront de la description suivante d'un exemple non limitatif de réalisation dans lequel il est fait référence aux dessins annexés qui représentent.
Figure 1, une vue éclatée en perspective du dispositif d'épissurage mécanique,
Figures 2 et 3, des vues respectivement en élévation et en bout du corps central d'épissure,
Figures 4 et 5, des vues schématiques, de coté, de deux variantes de réalisation du plateau,
Figures 6 et 8, des vues respectivement en coupe longitudinale et en bout de la partie supérieure de la fiche d'extrémité,
Figures 7 et 9, des vues respectivement en coupe longitudinale et en bout de la partie inférieure de la fiche d'extrémité,
Figures 10 à 13, des vues schématiques latérales du dispositif d'épissurage montrant les phases d'introduction d'une fiche d'extrémité dans le corps central d'épissure.

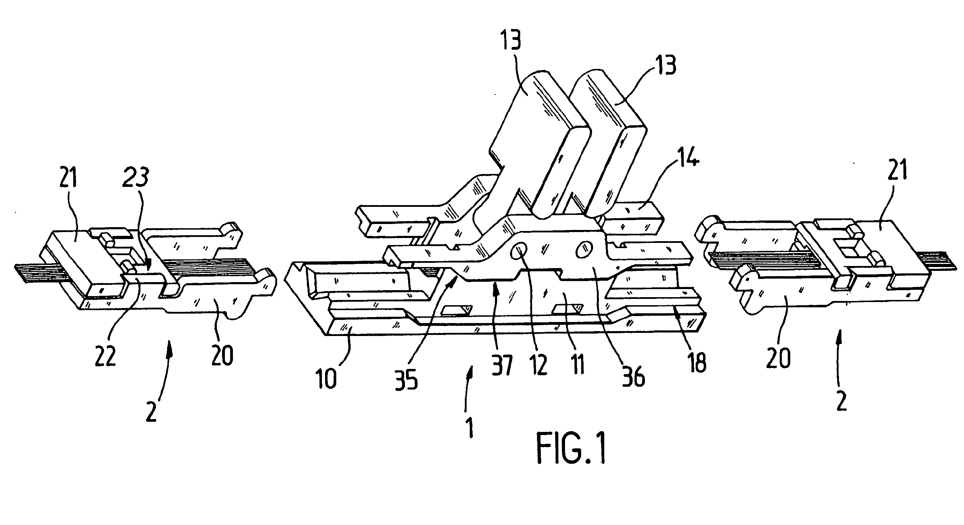

On a représenté à la figure 1, un corps d'épissure 1 désigné dans son ensemble par la référence 1 ainsi que deux fiches d'extrémité désignées dans leur ensemble par la référence 2.

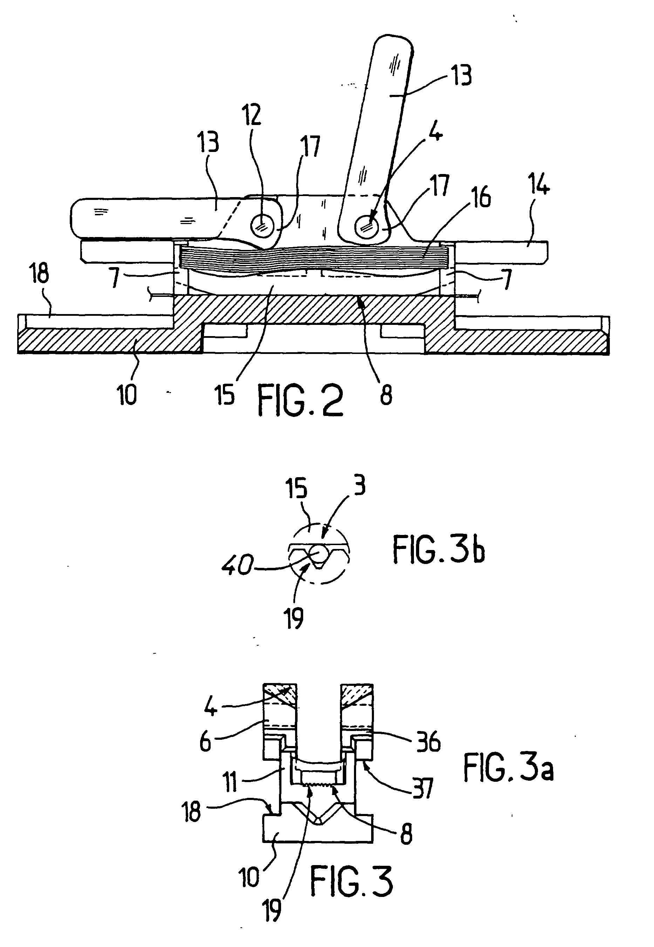

Le corps d'épissure 1 visible aussi au figures 2 et 3 se compose d'une platine de base 10 bordée de deux ailes verticales 11 coiffées d'un chapeau 36 de profil général trapézoïdal présentant des épaulements latéraux horizontaux 37 et dont la partie haute est percée d'orifices pour le passage de deux axes 12 sur lesquels s'articulent deux cames 13. Le chapeau 36 se prolonge par des lamelles horizontales 14 qui s'étendent au dessus de la platine 10, et dont les faces inférieures présentent des pans inclinés 35 orientés vers le bas et vers le centre du corps d'épissure.

Entre les ailes 11 et la platine 10 se trouve ménagé un tunnel à l'intérieur duquel se place un plateau 15 au dessus duquel sont empilées un certains nombres de lames métalliques 16 qui sont insérées entre le plateau et les extrémités profilées 17 des cames 13. Des pattes d'extrémité 7 du plateau 15 viennent en contact avec le fond plat 8 du tunnel.

Les parties latérales de la platine 10 sont creusées de rails 18 sur toute leur longueur et la partie plane inférieure 8 du tunnel est saignée de rainures parallèles 19 en forme de V, mieux visibles sur la figure 3b agrandie de la figure 3a. Les rainures servent de logement aux fibres dénudées 40 qui se placent sous la face inférieure 3 du plateau 15. Au montage les cames 13 sont insérées dans le corps 1 par l'intermédiaire du chanfrein 4 respectivement présent sur l'axe de la came et sur le corps d'épissure. Les axes 12 des cames 13 qui peuvent être des axes métalliques, sont ensuite positionnés dans les trous 6 prévus dans les parois latérales du chapeau 36.

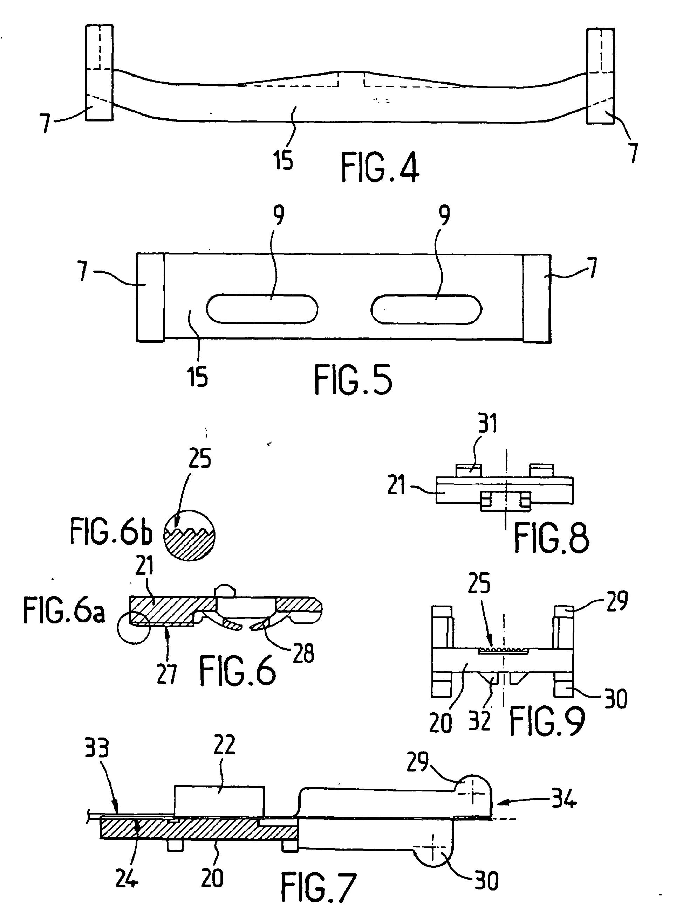

La figure 4 illustre plus clairement la forme du plateau 15 introduit entre les ailes 11 du corps d'épissure. Sa face inférieure est plane mais sa face supérieure est infléchie vers le haut dans sa partie centrale dans une zone où les lames 16 ne sont pas soumises à la pression exercée par les cames.

En variante de réalisation représentée à la figure 5, le plateau 15 n'est plus équipé de lames métalliques mais dispose d'évidements 9 qui autorisent une certaine flexion du plateau au droit des points d'appui des cames 13.

Les figures 1, 6, 7, 8 et 9 montrent comment est réalisée une fiche d'extrémité 2.

Celle-ci se compose d'une partie inférieure 20 et d'une partie supérieure 21 qui sont fixées l'une à l'autre par emmanchement forcé. Ce dernier est assuré par un ajustement serré entre des rebords 22 de la partie 20 et des échancrures 23 creusées dans la partie 21. La face supérieure 24 de la partie inférieure 20 et la face inférieure 27 de la partie supérieure 21 comportent des rainures transversales avec des stries en relief 33.

Des pattes 28 orientées vers le bas sont prévues sous la zone centrale de la partie supérieure 21. Au-dessus de cette zone sont également prévus deux bossages latéraux 31.

On remarquera le profil particulier de la partie inférieure 20 de la fiche 2, dont les ailes se terminent par un arrondi 29 au-dessus, et une patte de guidage arrondie 30, au-dessous et légèrement en retrait pour permettre le passage d'une lame de clivage. En outre le dessous de cette partie inférieure est munie de rampes profilées 32 permettant le positionnement latéral de la fiche d'extrémité dans le corps d'épissure.

Pour réaliser à l'aide du corps d'épissure 1 un épissurage mécanique d'une pluralité de fibres optiques, la première opération consiste à équiper chaque extrémité de l'élément multifibres ou micromodule ou encore ruban, d'une fiche d'extrémité 2. La seconde opération consistera à insérer sur le site, les deux fiches d'extrémité dans le corps d'épissure, puis à fermer celui-ci. Le travail de préparation en bout sur chaque extrémité diminue les longueurs de fibres libres nécessaires pour la préparation et la réalisation des épissures sans nécessité d'un plan de travail particulier. Par conséquent, les longueurs de lovage et leur encombrement sont également diminués.

Pour assurer le montage de la fiche d'extrémité, on commence par dénuder l'extrémité des fibres optiques avant de les placer sur la partie inférieure 20 de telle sorte que leurs parties gainées se placent dans les stries 33 et que les fibres dénudées se placent dans les rainures 25. On assure alors l'emmanchement forcé de la partie supérieure 21 sur la partie 20. Les pattes 28 viennent alors plaquer les fibres dans les rainures 25 (figure 6b), et se fléchissent jusqu'à ce que les stries en relief 27 viennent s'appliquer sur la partie gainée du ruban. Le maintien des fibres dans la fiche d'extrémité est donc assuré conjointement sur les revêtements de fibres et sur la fibre nue.

Le clivage des fibres est alors effectué au ras de l'extrémité 34 de la fiche.

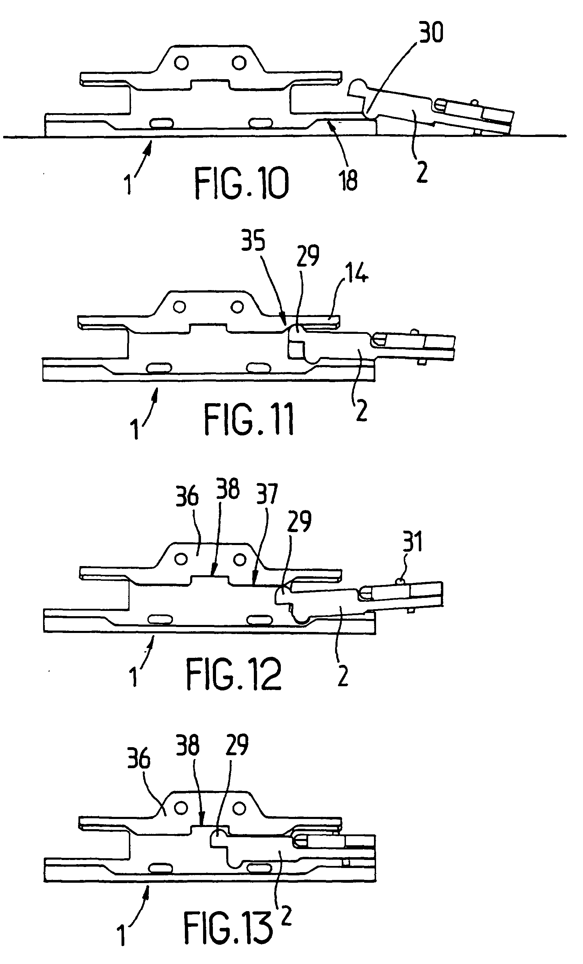

L'opération suivante consiste à insérer chaque fibre d'extrémité dans le corps d'épissure 1. Ces opérations sont illustrées aux figures 10 à 13. On place d'abord les pattes de guidage 30 de la fiche 2 à l'entrée des rails 18 du corps d'épissure 1 (figure 10). Ainsi positionnée, la fiche d'extrémité est déplacée vers l'intérieur du corps d'épissure de telle sorte que les arrondis 29 s'insèrent sous les lamelles horizontales 14 (figure 11) . De ce fait, la fiche d'extrémité est complètement guidée. Le contact de l'arrondi 29 sur le pan incliné 35 du corps d'épissure provoque l'inclinaison de la fiche par rapport au corps (figure 12) ce qui correspond au placage des fibres optiques dénudées 40 dans les rainures 19. Cette mise en flexion des fibres est maintenue sur une certaine longueur par le contact de l'arrondi 29 sous le rebord horizontal 37 du chapeau 36 jusqu'à ce que ledit arrondi vienne se placer dans un évidemment central 38 prévu sur le rebord horizontal. Les fibres optiques sont ainsi immobilisées dans le petit espace entre la face inférieure 3 du plateau et les rainures 19 (figures 3b et 12). Les bossages latéraux 31 de chaque fiche viennent alors fléchir les lamelles 14 dont la résistance élastique assure le verrouillage de la fiche dans le corps d'épissure. En fin de course, la fiche d'extrémité est venue en butée contre les faces d'extrémité 38 des ailes verticales 11.

Les fibres optiques de chaque fiche d'extrémité se trouvent ainsi parfaitement alignées, puisque parfaitement positionnées dans leurs rainures respectives.

On agit alors à l'aide des cames 13 pour que leurs extrémités profilées 17 exercent une pression sur les lames métalliques 16 qui vont faire descendre le plateau et le déformer pour que les fibres nues soient plaquées dans leurs rainures. Les deux cames restent ensuite en position basse de telle sorte que le corps d'épissure et les fiches d'extrémité se trouvent maintenus en frottement par la pression des lamelles 14.

## Revendications

1. Dispositif d'épissurage mécanique pour câble à fibres optiques, comportant un corp central d'épissure (1) servant au rattachement sur le site de deux fiches (2) d'extrémité de câbles qui s'emboîtent dans ledit corps d'épissure, en ce que le corps central dispose de moyens (18, 37, 35) pour le guidage et le verrouillage des fiches d'extrémité, ainsi que des moyens (8, 19) pour le positionnement des fibres dénudées (40), et en ce que le dispositif comporte également un plateau (15) qui est logé à l'intérieur du corps central d'épissure (1) le dispositif étant **caractérisé en ce qu'**il comprends des cames manoevrant le dit plateau et s'articulant sur le corps central d'épissure, le dit plateau étant manoeuvré pour plaquer et maintenir les fibres dénudées dans ledit corps central.

2. Dispositif d'épissurage selon la revendication 1, **caractérisé en ce que** le corps central d'épissure (1) se compose d'une platine de base (10) bordée de deux ailes verticales (11) coiffées d'un chapeau (36) de profil général trapézoïdal, et **en ce que** le tunnel ménagé entre les ailes (11) reçoit le plateau (15) en contact avec le fond plat (8) du tunnel.

3. Dispositif d'épissurage selon les revendication 1 et 2, **caractérisé en ce que** le corps central d'épissure (1) comporte deux camès (13) qui s'articulent sur deux axes (12) percés dans le chapeau (36), et agissent par des extrémités (17) qui sont profilées, sur des lames métalliques (16) placées au-dessus du plateau (15).

4. Dispositif d'épissurage selon les revendications 2 et 3, **caractérisé en ce que** la face inférieure du plateau (15) est plane et **en ce que** sa face supérieure est infléchie vers le haut dans sa partie centrale dans une zone où les lames (16) ne sont pas soumises à la pression exercée par les cames.

5. Dispositif d'épissurage selon les revendications 1 et 2, **caractérisé en ce que** le corps central d'épissure (1) comporte deux cames (13) qui s'articulent sur deux axes (12) percés dans le chapeau (36) et agissent par des extrémités (17) qui sont profilées, directement sur la face supérieure du plateau (15), disposant lui-même d'évidements (9) lui permettant de s'infléchir.

6. Dispositif d'épissurage selon les revendications 1 et 2, **caractérisé en ce que** les moyens pour le guidage et le maintien des fiches d'extrémité (2) dans le corps central d'épissure (1) sont constitués, de rails (18) creusés dans les parties latérales de la platine (10), d'épaulements latéraux horizontaux (37) prévus à la base du chapeau (36), et de pans inclinés (35) sur des lamelles horizontales (14) qui prolongent le chapeau (36).

7. Dispositif d'épissurage selon les revendications 1 et 2, **caractérisé en ce que** les moyens pour le positionnement des fibres dénudées (40) dans le corps central d'épissure (1) sont constitués de rainures (19) en forme de V creusées dans la partie plane inférieure (8) du tunnel ménagé entre les ailes (11).

8. Dispositif d'épissurage selon la revendication 1, **caractérisé en ce qu'il comporte deux** fiches d'extrémité (2) destinée à s'emboîter dans le corps central d'épissure (1), et que chaque fiche d'extrémité se compose d'une partie inférieure (20) et d'une partie supérieure (21) fixée à l'autre par un emmanchement forcé assuré entre des rebords (22) de la partie inférieure et des échancrures (23) de la partie supérieure.

9. Dispositif d'épissurage selon la revendication 8, **caractérisé en ce que** la face supérieure (24) de la partie inférieure (20) et la face inférieure (27) de la partie supérieure (21) de chaque fiche d'extrémité (2) comportent des rainures transversales avec des stries en relief (33).

10. Dispositif d'épissurage selon la revendication 8, **caractérisé en ce que** les ailes de la partie inférieure (20) de chaque fiche d'extrémité (2) se terminent par un arrondi (29) au-dessus, et par une patte de guidage arrondi (30), au-dessous et légèrement en retrait.

11. Dispositif d'épissurage selon la revendication 8, **caractérisé en ce que** la partie supérieure (21) de chaque fiche d'extrémité (2) porte des bossages latéraux (31).

## Claims

1. A mechanical splicing device for a fibre-optic cable comprising a central splicing body (1) used for the on-site attachment of two cable-end plugs (2) which nest in the said splicing body, in that the central body has means (18, 37, 35) for guiding and locking the end plugs, and means (8, 19) for positioning the stripped fibres (40), and in that the device also comprises a plate (15) that is housed inside the central splicing body (1), the device being **characterized in that** it comprises cams operating the said plate and articulating on the central splicing body, the said plate being operated to flatten and hold the stripped fibres in the said central body.

2. A splicing device according to claim 1, **characterized in that** the central splicing body (1) consists of a baseplate (10) bordered by two vertical wings (11) capped with a hat piece (36) of generally trapezoidal profile, and **in that** the tunnel made between the wings (11) receives the plate (15) in contact with the flat bottom (8) of the tunnel.

3. A splicing device according to either of claims 1 and 2, **characterized in that** the central splicing body (1) comprises two cams (13) which articulate on two shafts (12) pierced in the hat piece (36), and act, by shaped ends (17), on metal strips (16) placed above the plate (15).

4. A splicing device according to either of claims 2 and 3, **characterized in that** the bottom face of the plate (15) is flat and **in that** its top face is bent upwards in its central portion in a zone where the leaves (16) are not subjected to the pressure exerted by the cams.

5. A splicing device according to either of claims 1 and 2, **characterized in that** the central splicing body (1) comprises two cams (13) which articulate on two shafts (12) pierced in the hat piece (36) and act, by shaped ends (17), directly on the top face of the plate (15), itself having cavities (9) allowing it to bend.

6. A splicing device according to either of claims 1 and 2, **characterized in that** the means for guiding and holding the end plugs (2) in the central splicing body (1) consist of rails (18) hollowed out in the side portions of the baseplate (10), side horizontal shoulders (37) provided at the base of the hat piece (36), and inclined faces (35) on the horizontal bars (14) that extend the hat piece (36).

7. A splicing device according to either of claims 1 and 2, **characterized in that** the means for positioning the stripped fibres (40) in the central splicing body (1) consist of V-shaped grooves hollowed out in the bottom flat portion (8) of the tunnel made between the wings (11).

8. A splicing device according to claim 1, **characterized in that** it comprises two end plugs (2) intended to nest in the central splicing body (1) and **in that** each end plug consists of a bottom portion (20) and a top portion (21) attached to the other by a forced sleeve-fitting made between the rims (22) of the bottom portion and the indentations (23) of the top portion.

9. A splicing device according to claim 8, **characterized in that** the top face (24) of the bottom portion (20) and the bottom face (27) of the top portion (21) of each end plug (2) comprise transverse grooves with ridges in relief (33).

10. A splicing device according to claim 8, **characterized in that** the wings of the bottom portion (20) of each end plug (2) terminate in a rounded shape (29) above, and in a rounded guide lug (30) beneath and slightly set back.

11. A splicing device according to claim 8, **characterized in that** the top portion (21) of each end plug (2) supports lateral bosses (31).

## Patentansprüche

1. Mechanische Spleißvorrichtung für faseroptische Kabel mit einem zentralen Spleißhauptstück (1), das der Vor-Ort-Befestigung von zwei Kabelendsteckern (2) dient, die in das Spleißhauptstück gesteckt werden, wobei das zentrale Hauptstück Einrichtungen (18, 37, 35) zur Führung und Verriegelung der Endstecker sowie Einrichtungen (8, 19) zur Positionierung der abgemantelten Fasern (40) umfasst, und auch eine Platte (15) umfasst, die Im Innem des Spleißhauptstücks (1) sitzt,
wobei die Vorrichtung **dadurch gekennzeichnet ist, dass** sie Nocken zur Betätigung der genannten Platte umfasst, die gelenkig mit dem Spleißhauptstück verbunden sind, wobei die genannte Platte betätigt wird, um die abgemantelten Fasern in dem zentralen Hauptstück zu pressen und festzuhalten.

2. Spleißvorrichtung nach Anspruch 1, **dadurch gekennzeichnet, dass** das zentrale Spleißhauptstück (1) gebildet wird durch eine Basisplatine (10), begrenzt durch zwei vertikale Flügel (11), auf denen ein Kopf (36) mit generell trapezförmigem Profil- sitzt, und **dadurch**, dass der zwischen den Flügeln (11) vorgesehene Tunnel die Platte (15) aufnimmt, in Kontakt mit dem ebenen Boden (8) des Tunnels.

3. Spteißvorrichtung nach Anspruch 1 und 2, **dadurch, gekennzeichnet, dass** das zentrale Spleißhauptstück (1) zwei Nocken (13) umfasst, die schwenkbar auf zwei in den Kopf (36): montierten Achsen (12) sitzen und mit entsprechend profilierten Enden (17) auf Metalllamellen (16) wirken, die sich auf der Platte (15) befinden.

4. Spleißvorrichtung nach Anspruch 2 und 3, **dadurch gekennzeichnet, dass** die Unterseite der Platte (15) eben ist, und dass die Oberseite in ihrem zentralen Teil, in einer Zone, wo die Lamellen (16) nicht dem durch die Nocken ausgeübten Druck unterliegen, nach oben gebogen ist.

5. Spleißvorrichtung nach Anspruch 1 und 2, **dadurch gekennzeichnet, dass** das zentrale Spleißhauptstück (1) zwei Nocken (13) umfasst, die schwenkbar auf zwei in den Kopf (36) montierten Achsen (12) sitzen und mit entsprechend profilierten Enden (17) direkt auf die Oberseite der Platte (15) wirken, die ihrerseits Aussparungen (9) aufweist, die ihr ermöglichen, sich zu biegen.

6. Spleißvorrichtung nach Anspruch 1 und 2, **dadurch gekennzeichnet, dass** die Einrichtungen zum Führen und Festhalten der Endstecker (2) in dem Spleißhauptstück (1) gebildet werden durch in die seitlichen Teile der Platine (10) eingearbeitete Schienen (18), an der Basis des Kopfs (36) vorgesehene horizontale seitliche Schultern (37) und schräge Flächen (35) an den horizontalen Venängenjngseiementen (14) des Kopfes (36).

7. Spleißvorrichtung nach Anspruch 1 und 2, **dadurch gekennzeichnet, dass** die Einrichtungen zum Positionieren der entmantelten Fasern (40) in dem Spleißhauptstück (1) gebildet werden durch V-förmige Rillen (19), eingearbeitet in den ebenen Unterteil bzw. Boden (8) des zwischen den Flügeln (11) ausgesparten Tunnels.

8. Spleißvorrichtung nach Anspruch 1, **dadurch gekennzeichnet, dass** sie zwei Endstecker (2) umfasst, die dazu bestimmt sind, in das zentrale Spleißhauptstück (1) gesteckt zu werden, und dass jeder Endstecker durch ein Unterteil (20) und ein Oberteil (21) gebildet wird, die miteinander zwangsverschachtelt werden, zwischen den Rändern (22) des Unterteils und Ausschnitten bzw. Aussparungen (23) des Oberteils.

9. Spleißvorrichtung nach Anspruch 8, **dadurch gekennzeichnet, dass** die Oberseite (24) des Unterteils (20) und die Unterseite (27) des Oberteils (21) jedes Endsteckers (2) Querrillen mit reliefartiger Riffelung (33) umfasst.

10. Spleißvorrichtung nach Anspruch 8, **dadurch gekennzeichnet, dass** jeder Endstecker (2) auf seiner Oberseite mit einer Rundung (29) und auf seiner Unterseite mit einem gerundeten und etwas zurückversetzten Führungsansatz (30) endet.

11. Spleißvorrichtung nach Anspruch 8, **dadurch gekennzeichnet, dass** der Oberteil (21) jedes Endsteckers (2) seitliche Vorsprünge bzw. Ansätze (31) umfasst.
